# EUROPÄISCHE PATENTSCHRIFT

(11) **EP 3 101 375 B1**
(45) Veröffentlichungstag und Bekanntmachung des Hinweises auf die Patenterteilung: **05.08.2020**
(21) Anmeldenummer: 16172761.5
(22) Anmeldetag: 02.06.2016
(51) Int. Cl.: F27B 3/18, C21C 5/52, C22B 34/32, C22C 33/04, F27D 13/00, F27D 17/00

(54) **VERFAHREN ZUR ERZEUGUNG VON FECR IN EINEM AC-REDUKTIONSOFEN IM SCHLACKENPROZESS MIT OPTIONAL THYRISTORGESTEUERTEM LICHTBOGEN**
METHOD FOR GENERATING FECR IN AN AC REDUCTION FURNACE IN SLAG PROCESS WITH OPTIONAL THYRISTOR-CONTROLLED ARC
PROCÉDÉ POUR LA FABRICATION DE FECR DANS UN FOUR DE RÉDUCTION AC DANS LE PROCESSUS À SCORIES AVEC ARC ÉLECTRIQUE OPTIONNEL CONTRÔLÉ PAR UN THYRISTOR

(30) Priorität: 02.06.2015 DE 102015210225
(43) Veröffentlichungstag der Anmeldung: 07.12.2016
(73) Patentinhaber: SMS group GmbH, 40237 Düsseldorf (DE)
(72) Erfinder: Lembgen, Hans-Erich, 40477 Düsseldorf (DE); Ionita, Mircea, 40629 Düsseldorf (DE); König, Roland, 45472 Mülheim a. d. Ruhr (DE); Henke, Patrick, 47169 Duisburg (DE); Oterdoom, Harmen Johannes, 40219 Düsseldorf (DE)
(74) Vertreter: Klüppel, Walter

(56) Entgegenhaltungen:
- CN-U- 202 770 174
- DE-A1-102009 053 920
- US-A- 3 303 257
- US-A- 4 414 026

## Beschreibung

Die Erfindung betrifft ein Verfahren zur Erzeugung von FeCr aus feinen und stückigen Chromerzen mit einfacher Ofentechnologie ohne Vorbehandlung der Erze.

Bisher wird FeCr durch Verarbeiten, Schmelzen und Reduzieren von nicht vorbehandeltem Stückerz gewonnen. Das geschieht in einem mit Möller gefülltem SAF ohne nennenswertes Schlackenbad. Bekannte Erz-Abbau-Methoden führen zu schlechteren Qualitäten, die zu immer feinkörnigeren, bis hin zu staubförmigen, Erzen führen.

In der EP 1 263 994 B1 ist ein mehrstufiges Pelletierverfahren beschrieben, welches für das eingesetzte FeCr zwar sehr gute Ofen-Betriebsweisen ermöglicht, aber einen hohen Aufwand energetisch und zum Teil sehr verschleißresistente Ofenkomponenten erfordert.

Eine Alternative ist das Eintragen von staubförmigen Erzen mittels Direktchargierung oder durch ein Hohlelektrodensystem (HES) in den Lichtbogen eines DC-SAF. Ein weiterer Weg ist das Sintern oder Brikettieren der Erze vor dem Eintrag in den SAF.

Nachteilig ist, dass der Anteil der Stückerze immer geringer wird. Auch ist das in der EP 1 263 994 B1 beschriebene Verfahren technisch aufwändig und erfordert einen mehrstufigen Prozess mit entsprechendem Platz- und Personalbedarf.

Weiterhin sind die erforderlichen Sinterbänder teuere Verschleißteile, deren Betriebskosten relativ hoch sind.

Die DC-Technologie ist zudem energieaufwändig, die thermischen Verluste sind größer und die Gleichstromerzeugung bedingt elektrische Verluste. Dabei ist der Energieeintrag auf einen Punkt in der Ofenmitte konzentriert, wodurch der Deckelverschleiß ebenfalls relativ groß ist.

Das alleinige Sintern oder Brikettieren der Erze führt meist zu instabilen Möllerqualitäten, insbesondere ist die mechanische Stabilität der Briketts meist eingeschränkt, was wiederum staubförmigen Einsatz in hohem Prozentanteil bedingt. Der klassische AC-SAF für FeCr erfordert aber gasdurchlässigen, lockeren aber dennoch festen Möller. In CN 202770174 U, US 4 414 026 A, US 3 303 257 A und DE 10 2009 053 920 A1 werden Vorrichtungen und Verfahren zur Herstellung von Ferrolegierungen beschrieben.

Aufgabe der vorliegenden Erfindung ist es, den Eintrag von staubförmigen oder überwiegend feinen FeCr - Erzen in einen SAF ohne großen technischen Aufwand mit möglichst niedrigem Energiebedarf zu ermöglichen.

Gelöst wird diese Aufgabe dadurch, dass in einem AC - FeCr - Prozess, der vom DC-FeCr-SAF - und FeNi-SAF - Prozess bekannte Betrieb mit Schlackenbad und darauf brennenden Lichtbogen übernommen wird. Durch diese Maßnahmen ist erfindungsgemäß zusätzlich eine einfache Energierückgewinnung möglich, indem durch Vorwärmung des Möllers durch die Ofenabgase die Eintragstemperatur erhöht wird. Dabei ermöglicht eine Thyristor - Lichtbogensteuerung einen stabilen Betrieb. Die Verwendung von optional vorgebackenen Elektroden ermöglicht den Einsatz preiswerterer und leichter zu bewegender Elektrodenstränge.

### Erfindungsgemäß erfolgt dieser Prozess in den folgenden Schritten:

Erzeugung von FeCr in einem Drehstrom Reduktionsofen im Lichtbogenbetrieb mit Thyristorsteuerung; einen vorzugsweise runden Reduktionsofen mit drei Elektroden oder einen rechteckig Reduktionsofen mit drei oder mehr Elektroden, wobei vorzugsweise Graphit bzw. Kohleelektroden oder auch klassische Söderberg-Elektroden verwendet werden.

Die Vorwärmung des Möllers aus Cr-Erz, Reduktionsmittel und Zuschlagstoffen und Rücklaufmaterial erfolgt in einem vorgeschalteten Aggregat, vorzugsweise im Gegenstrom in einem Drehrohrofen durch verbranntes Ofenabgas, wobei der Transport des vorgewärmten Möllers in den Drehstromreduktionsofen über ein Heißtransport System und feuerfest ausgemauerte Ofenbunker und Beschickungsrohre erfolgt.

Die Reinigung des Abgases erfolgt in einer nachgeschalteten Filteranlage, wobei durch einen Bypass das Ofenabgas aus dem Drehstromreduktionsofen teilweise durch das, als Drehrohrofen ausgebildete, vorgeschaltete Aggregat in die Filteranlage geleitet wird.

Weitere die Erfindung verbessernde Maßnahmen bestehen in der Verwendung von leichten vorgebackenen Elektroden in Verbindung mit Elektrospindelantrieben als Ersatz für Hydraulikantriebe und die Rückführung kompaktierter Stäube aus Primär- und Sekundär-Entstaubungsanlagen mit integrierter Möller-Vorwärmung mittels Durchströmung des Möllers durch verbranntes Ofen-Abgas.

Durch diese Maßnahmen wird eine kompakte Anlage aus an sich bekannten und bewährten Komponenten mit völlig neuem Arrangement geschaffen, die für zahlreiche Erze geeignet ist, lediglich eine einfache, stabile und flexible Steuerung erfordert und niedrige Betriebskosten und Investitionskosten aufweist.

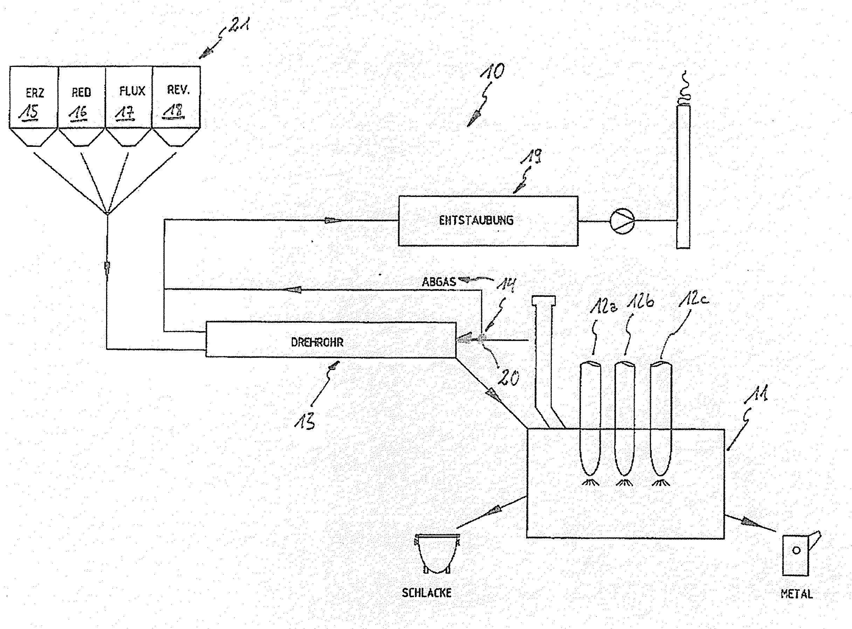

Die Erfindung wird im folgendem anhand einer beispielhaften Ausführungsform unter Bezugnahme auf die beigefügte Zeichnung näher erläutert. Die einzige Figur zeigt:
Eine AC-SAF Ofenanlage 10 zur Durchführung des erfindungsgemäßen Verfahrens zum Erzeugen von FeCr in einem Drehstromreduktionsofen 11. Die Bauart des Drehstromreduktionsofens 11 ist vorzugsweise rund, wobei er mit drei Elektroden 12a, 12b und 12c bestückt werden kann. Allerdings ist auch eine rechteckige Bauart des Drehstromreduktionsofens 11 möglich. In diesem Fall wären dann mindestens drei Elektroden oder mehr als drei Elektroden vorteilhaft. Die Elektroden 12a, 12b und 12c sind vorzugsweise Graphit bzw. Kohleelektroden oder aber auch klassische Söderberg Elektroden.

Der AC-SAF Ofenanlage 10 ist eine Möllervorwärmung 13 zugeordnet. Die Vorwärmung 13 (vorgeschaltetes Aggregat) ist in dieser Ausführungsform als Drehrohr ausgebildet, um eine einfache Energierückgewinnung durch Vorwärmung des Möllers aus Cr-Erz 15, Reduktionsmittel 16, Zuschlagstoffe/Fließmittel 17 (FLUX) und Rücklaufmaterial 18 (REV) durch die Ofenabgase 14 zu ermöglichen.

Der Transport des vorgewärmten Möllers in den Drehstromreduktionsofen 11 erfolgt über ein Heißtransportsystem und feuerfest ausgemauerte Ofenbunker und Beschickungsrohre.

Die Reinigung des Abgases aus der Vorwärmung 13 erfolgt in einer nachgeschalteten Filteranlage 19, die in dieser Ausführungsform eine Entstaubung umfasst. Durch einen Bypass 20 wird ein Teil des heißen Ofengases aus dem Drehstromreduktionsofen 11 direkt in die Filteranlage 19 (Entstaubung) geleitet. Die in der Filteranlage 19 gesammelten Filterstäube können beispielsweise in einer hierzu vorgesehenen Aufnahme eines Bunkers 21 gesammelt und vorgehalten werden, um dann im Bedarfsfall durch die Vorwärmung 13 als Möller wieder in den Drehstromreduktionsofen 11 zu gelangen.

Vorzugsweise weist der Bunker 21 auch getrennte Aufnahmen für das Cr-Erz 15, dem Reduktionsmittel 16 und für die Zuschlagstoffe /Fließmittel 17 auf.

### Bezugszeichenliste

- 10: AC-SAF Ofenanlage
- 11: Drehstromreduktionsofen
- 12a, 12b, 12c: Elektroden
- 13: Vorwärmung (vorgeschaltetes Aggregat)
- 14: Ofenabgase
- 15: Cr-Erz (ERZ)
- 16: Reduktionsmittel (RED)
- 17: Zuschlagstoffe/Fließmittel (FLUX)
- 18: Rücklaufmaterial (REV.)
- 19: Filteranlage (Entstaubungsanlage)
- 20: Bypass
- 21: Bunker

## Patentansprüche

1. Verfahren zur Erzeugung von FeCr in einem vorzugsweise runden Drehstromreduktionsofen (11) mit drei Elektroden (12a, 12b, 12c) oder einem rechteckigen Drehstromreduktionsofen mit drei (12a, 12b, 12c) oder mehr als drei Elektroden im Lichtbogenbetrieb mit Thyristorsteuerung, in dem vorzugsweise Graphit bzw. Kohleelektroden oder klassische Söderberg-Elektroden verwendet werden, und eine Vorwärmung des Möllers aus Cr-Erz (15), Reduktionsmittel (16), Zuschlagstoffen (17) und Rücklaufmaterial (18) in einem vorgeschalteten Aggregat (13), vorzugsweise im Gegenstrom in einem Drehrohrofen, durch verbranntes Ofenabgas erfolgt, wobei der Transport des vorgewärmten Möllers in den Drehstromreduktionsofen (11) über ein Heißtransport System und Beschickungsrohre erfolgt, wobei die Reinigung des Abgases in einer nachgeschalteten Filteranlage (19) erfolgt, wobei durch einen Bypass (20) das Ofenabgas aus dem Drehstromreduktionsofen (11) teilweise durch das ,als Drehrohrofen ausgebildete, vorgeschaltete Aggregat (13) in die Filteranlage (19) geleitet wird und durch die Verwendung von Elektrospindelantrieben zur Rückführung kompaktierter Stäube aus der Primär- und/oder Sekundär-Entstaubung der Filteranlage (19) in das, als Drehrohrofen ausgebildete, vorgeschalteten Aggregat (13) mit einer integrierten Möller-Vorwärmung, die mittels Durchströmung des Möllers mit verbrannten Ofenabgas aus dem Drehstromreduktionsofen (11) betrieben wird.

## Claims

1. Method of producing FeCr in a preferably round alternating current reduction furnace (11) with three electrodes (12a, 12b, 12c) or a rectangular alternating current reduction furnace with three electrodes (12a, 12b, 12c) or more than three electrodes in arc operation with thyristor control, in which preferably graphite or carbon electrodes or classic Soderberg electrodes are used, and preheating of the charge of Cr ore (15), reduction agent (16), additives (17) and return material (18) in an upstream unit (13), preferably in counter-flow in a drum furnace, is carried out by combusted furnace waste gas, wherein transport of the preheated charge into the alternating current reduction furnace (11) is carried out by way of a hot transport system and charge pipe, wherein cleaning of the waste gas is carried out in a downstream filter plant (19), wherein the furnace waste gas from the alternating current reduction furnace (11) is conducted through a bypass (20) partly through the upstream unit (13), which is constructed as a drum furnace, into the filter plant (19) and through the use of electric spindle drives for the feedback of compacted particulates from the primary and/or secondary dust extraction of the filter plant (19) to the upstream unit (13), which is constructed as a tunnel furnace, with integrated charge preheating, which is operated by means of throughflow of the charge by combusted furnace waste gas from the alternating current reduction furnace (11).

## Revendications

1. Procédé destiné à la production de FeCr dans un four à réduction (11), de préférence de forme ronde, qui travaille en courant triphasé, comprenant trois électrodes (12a, 12b, 12c) ou dans un four à réduction de forme rectangulaire comprenant trois électrodes (12a, 12b, 12c) ou un nombre supérieur à trois électrodes, qui travaille en courant triphasé, dans un mode de fonctionnement du type à arc électrique comprenant une commande par thyristor, dans lequel on utilise de préférence des électrodes en graphite, respectivement en carbone ou encore des électrodes classiques de type Söderberg, et dans lequel on soumet à un préchauffage les constituants de charge, à savoir le minerai de Cr (15), les agents de réduction (16), les additifs (17) et les retours de production (18) dans un agrégat (13) monté à l'avant, de préférence à contre-courant dans un four tubulaire rotatif, en utilisant les gaz d'échappement brûlés du four; dans lequel le transport des constituants de charge préchauffés dans le four à réduction (11) qui travaille en courant triphasé a lieu par l'intermédiaire d'un système de transport à chaud et d'un tube de chargement ; dans lequel la purification des gaz d'échappement a lieu dans une installation de filtration (19) montée à la suite; dans lequel, en passant par une dérivation (20), les gaz d'échappement du four que l'on obtient à partir du four à réduction (11) qui travaille en courant triphasé, sont guidés, en passant en partie à travers l'agrégat (13) monté à l'avant et réalisé sous la forme d'un four tubulaire rotatif, jusque dans l'installation de filtration (19), et par l'utilisation de commandes électriques par broches à des fins de recyclage des poussières compactées que l'on obtient à partir du dépoussiérage primaire et/ou secondaire de l'installation de filtration (19), jusque dans l'agrégat (13) monté à l'avant, réalisé sous la forme d'un four tubulaire rotatif, comprenant un préchauffage intégré des substances de charge, qui est entraîné au moyen d'un écoulement des substances de charge avec les gaz d'échappement brûlés que l'on obtient à partir du four émanant du four à réduction (11) qui travaille en courant triphasé.
